# EUROPÄISCHE PATENTSCHRIFT

(11) **EP 1 314 883 B1**
(45) Veröffentlichungstag und Bekanntmachung des Hinweises auf die Patenterteilung: **22.07.2009**
(21) Anmeldenummer: 02025767.1
(22) Anmeldetag: 16.11.2002
(51) Int. Cl.: F02M 63/02, F02M 55/02, F02M 59/02, F02M 63/00, F02M 55/04, F02M 45/04

(54) **Kraftstoffversorgungsanlage in Form eines Common-Rail-Systems einer Brennkraftmaschine mit mehreren Zylindern**
Common rail fuel supply system of an internal combustion engine with multiple cylinders
Système d'alimentation en carburant à rampe commune pour un moteur à combustion interne à plusieurs cylindres

(30) Priorität: 21.11.2001 DE 10157135
(43) Veröffentlichungstag der Anmeldung: 28.05.2003
(73) Patentinhaber: MAN Diesel SE, 86224 Augsburg (DE)
(72) Erfinder: Maier, Ludwig, 86420 Diedorf (DE); Vogel, Christian, Dr., 86135 Augsburg (DE); Schrott, Christoph, 86169 Augsburg (DE); Söngen, Matthias, 86165 Augsburg (DE); Hlousek, Jaroslav, 5440 Golling (AT); Kögler, Bernd, 5400 Hallein (AT); Graspeunter, Christian, 5400 Hallein (AT); Sassnik, Hagen, 5412 Puch (AT)
(74) Vertreter: Grünberger, Christian Thomas

(56) Entgegenhaltungen:
- EP-A- 0 959 245
- EP-A- 1 130 251
- US-B1- 6 276 336

## Beschreibung

Die Erfindung betrifft eine Kraftstoffversorgungsanlage in Form eines Common-Rail-Systems gemäss dem Oberbegriff des Anspruchs 1, sowie einzelne Komponenten eines Common-Rail-Systems, die in besonders vorteilhafter Weise für den Einsatz in einer erfindungsgemässen Kraftstoffversorgungsanlage geeignet sind.

Diese Kraftstoffversorgungsanlage soll insbesondere bei mit Schweröl betriebenen grossen Dieselbrennkraftmaschinen zum Einsatz kommen. Bekanntlich sind aufgrund der problematischen Korrosions- und Viskositätseigenschaften von Schweröl (Neigung zur Paraphinausscheidung insbesondere bei niedriger Temperatur im Ruhezustand der Brennkraftmaschine) besondere Voraussetzungen seitens des Motors bzw. der Kraftstoffversorgungsanlage zu stellen. Üblicherweise wird deshalb bei Verwendung einer für den Schwerölbetrieb geigneten Kraftstoffversorgungsanlage vor dem Motorstop auf Betrieb mit Dieselkraftstoff umgeschaltet, so daß sich nur noch Diesel in den Förderleitungen und den Komponenten der Kraftstoffversorgungsanlage, wie Hochdruckpumpen, Druckspeicherleitung oder Brennstoffinjektoren, befindet, welches unproblematischer hinsichtlich Viskosität und Paraphinausscheidung ist. Es ist auch bekannt, das Schweröl selbst und die Brennstoffinjektoren mittels einer Heizung während längerer Ruhezeiten aufzuheizen und so der Paraphinbildung vorzubeugen.

Aus der EP 0 959 245 A2 ist eine solche Kraftstoffversorgungsanlage mit den Merkmalen des Oberbegriffs des Anspruchs 1 bekannt. Die Funktion der Brennstoffinjektoren wird insbesondere mittels magnetischer Ventile elektronisch kontrolliert, um eine ausreichend kurze und präzise Einspritzung zu gewährleisten.

Dabei ist bereits angesprochen, dass die Anwendung eines Common-Rail-Systems bei einer Grossdieselbrennkraftmaschine wegen der dabei erforderlichen Länge der Druckspeicherleitung bezüglich eines konstanten Speicherdrucks (Druckwellen) für alle Zylinder entlang der Motorachse problematisch ist. Aus diesem Grunde ist bereits eine Druckspeicherleitung aus mindestens zwei separaten, mittels Verbindungsleitungen miteinander verbundenen Speichereinheiten realisiert worden, wobei die Speichereinheiten jeweils an mindestens zwei Brennstoffinjektoren anschliessbar und jeweils mit einer separaten Hochdruckpumpe beaufschlagbar sind.

Im Motorbetrieb sind dennoch weiterhin Probleme zu erwarten, insbesondere hinsichtlich der Festigkeit der einzelnen Speichereinheiten, da die sie miteinander verbindenden Förderleitungen als radiale Bohrungen einmünden und dort Schwachstellen darstellen und somit die Stabilität des Common-Rail gefährden. Desweiteren wäre eine höhere Flexibilität bei der Zusammenstellung der Komponenten der Kraftstoffversorgungsanlage wünschenswert, da die Anzahl der Speichereinheiten mit der Anzahl der Hochdruckpumpen gekoppelt ist und deren Zuordnung nicht entsprechend dem vorhandenen Platzangebot, insbesondere bei Nachrüstlösungen, wählbar ist. Ausserdem müssen bisher, um eine ausreichend grosse Fördermenge und einen ausreichend grossen Förderdruck zu gewährleisten, starke Pumpen mit grossen Hubvolumina verwendet werden. Daraus resultieren wiederum erhebliche dynamische Druckanteile, wie Druckschläge und Druckpulsationen, aus welchen wiederum starke mechanische Belastungen der Förderleitungen folgen, die eine beträchtliche Gefahr von Schäden wie Leckagen oder Brüchen mit sich bringen.

All diese voran beschriebenen Nachteile der bisherigen Kraftstoffversorgungsanlage, insbesondere für mit Schweröl betriebene Grossdieselbrennkraftmaschinen, will die Erfindung beseitigen. Es ist daher die Aufgabe der Erfindung, eine Kraftstoffversorgungsanlage in Form eines Common-Rail-Systems mit den Merkmalen des Oberbegriffs des Anspruchs 1, sowie verbesserte Komponenten eines Common-Rail-Systems, die insbesondere zur Anwendung in einer solchen Kraftstoffversorgungsanlage geeignet sind, vorzuschlagen, so dass ein platzsparender, flexibler, aber dennoch modularer Aufbau möglich wird und zudem die Betriebssicherheit der kompletten Kraftstoffversorgungsanlage bezüglich des Standes der Technik erhöht ist.

Erfindungsgemäss wird diese Aufgabe durch die im Anspruch 1 genannten Merkmale gelöst. Durch die Auslegung jeder einzelnen Speichereinheit der Druckspeicherleitung so, dass sie jeweils ein Speichervolumen zur Bedienung höchstens etwa zweier Zylinder aufweisen, kann damit die Position einer Speichereinheit entlang der Brennkraftmaschine, sowie ihre Länge so gewählt werden, dass sich eine kürzestmögliche Druckspeicherleitung aufbauen lässt. In besonders bevorzugter Weise ist eine Speichereinheit so ausgelegt, dass sie jeweils ein Speichervolumen zur Bedienung zweier Zylinder aufweist. Durch das Vorsehen von Speicherdeckeln jeweils an beiden Stirnseiten, in diese hinsichtlich der Kraftstoffzuführung und - weiterleitung alle Funktionseinheiten integriert sind , ist die Nachrüstung an bestehenden Motortypen mit Common-Rail-Einspritzsystemen deutlich vereinfacht worden. Sämtliche Hydraulikanschlüsse, sowie Halterungen zur Positionierung der Speichereinheiten entlang der Brennkraftmaschine, sowie Abdichtelemente für die Speichereinheit, sowie Funktionseinheiten wie Mengenbegrenzungsventil befinden sich im Speicherdeckel, so dass ein modularer Aufbau einfach möglich wird und desweiteren die Betriebssicherheit erhöht ist, da die Speichereinheiten und somit die gesamte Druckspeicherleitung frei sind von äusseren Kräften, die von Halterungen und hydraulischen Anschlüssen herrühren, die nunmehr durch die erfindungsgemäss ausgebildeten Speicherdeckel aufgenommen werden.

Letztendlich wird noch durch die Massnahme, dass im Hochdruckbereich zwischen Hochdruckpumpe und zusammengesetzter Druckspeicherleitung mindestens ein separater Pumpenspeicher angeordnet ist, der zur Kraftstofförderung mit wenigstens einem Speicherdeckel einer Speichereinheit der Druckspeicherleitung verbunden ist und von mindestens einer Hochdruckpumpe beaufschlagbar ist, erreicht, dass die von den Pumpen erzeugten dynamischen Druckanteile erheblich reduzierbar sind, bevor der geförderte Kraftstoff, also z.Bsp. das Schweröl in die Pumpenleitungen eingespeist wird, welche letztendlich in die Druckspeicherleitung führen. Somit wird weiterhin die mechanische Belastung der Speichereinheiten deutlich reduziert und die Betriebssicherheit der gesamten Kraftstoffversorgungsanlage erhöht.

Dadurch, dass das Speichervolumen jeder Speichereinheit in etwa das 50 bis 500-fache der erforderlichen Einspritzmenge pro Zylinder und Arbeitsspiel beträgt, wird in besonders vorteilhafter Weise ein modularer Aufbau der Druckspeicherleitung gefördert.

In einer vorteilhaften Ausgestaltung der Erfindung sind die Speichereinheiten der Druckspeicherleitung über die Förderleitungen in Durchflussrichtung hintereinander geschaltet, d.h. in Serie mit Kraftstoff beaufschlagbar.

Als weitere vorteilhafte Ausgestaltung der Kraftstoffversorgungsanlage ist zu sehen, dass die Speichereinheiten der Druckspeicherleitung in axialer Richtung verlegte Leitungsrohre aufnehmen können, die Drosselbohrungen aufweisen, so dass alle Speichereinheiten parallel mit Kraftstoff beaufschlagbar sind.

Als besonders vorteilhafte Massnahme ist weiterhin anzusehen, dass die Speichereinheiten mit einer axialen Länge ausgeführt sind, die, bezogen auf die Achse der Brennkraftmaschine, dem Zylinderabstand mit einer Toleranz von +/-20% entspricht.

Die erfindungsgemässe Kraftstoffversorgungsanlage eignet sich für alle Typen von Grossdieselmotoren, insbesondere für schwerölbetriebene Brennkraftmaschinen. Die erfindungsgemässe Speichereinheit, die erfindungsgemässe Pumpvorrichtung, sowie die erfindungsgemässe Spülvorrichtung eigenen sich für alle Arten von Common-Rail-Einspritzsysteme, perfektionieren allerdings in der Kombination die erfindungsgemässe Kraftstoffversorgungsanlage nach Anspruch 1.

Weitere vorteilhafte Massnahmen und bevorzugte Ausgestaltungen der Erfindung ergeben sich aus den abhängigen Ansprüchen.

Im Folgenden wird die Erfindung anhand der Zeichnung näher erläutert. In der stark schematischen Zeichnung zeigen:
- Fig. 1: eine Gesamtdarstellung der erfindungsgemässen Kraftstoffversorgungsanlage,
- Fig. 2a: einen Teilschnitt durch eine Speichereinheit mit erfindungsgemässen Speicherdeckel,
- Fig. 2b: eine weitere Ausführungsvariante des erfindungsgemässen Speicherdeckels,
- Fig. 3-6: jeweils eine Variante der Dichtgeometrie von Speicherdeckel und Speichereinheit und
- Fig. 7: einen Längsschnitt durch das Sicherheitsventil der erfindungsgemässen Spüleinrichtung.

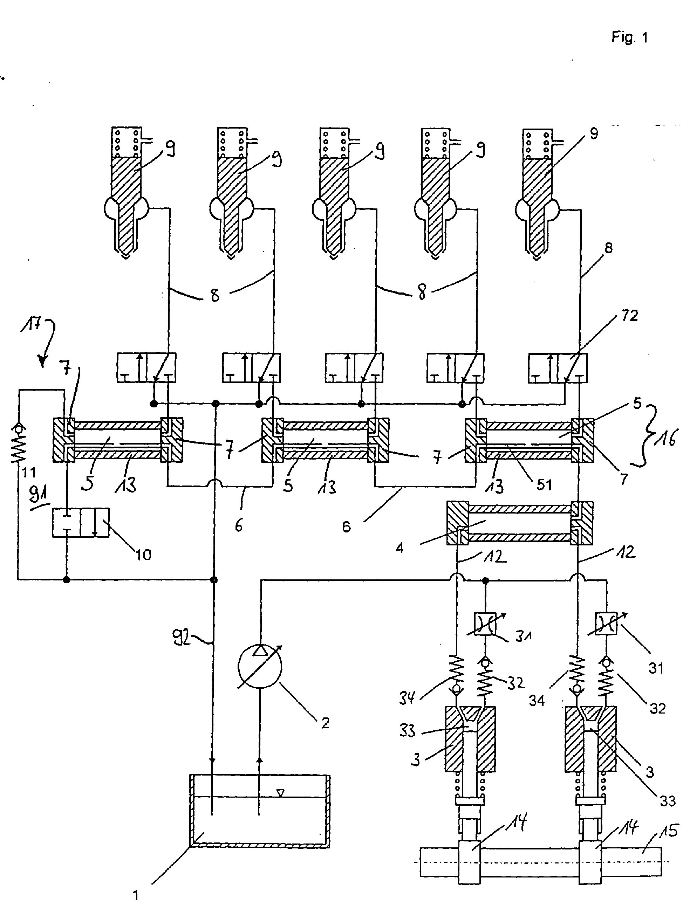

Das Schema nach Fig. 1 zeigt eine modular aufgebaute Kraftstoffversorgungsanlage in Form eines Common-Rail-Systems für eine nicht weiter dargestellte, nach dem Dieselbetrieb arbeitende Brennkraftmaschine. Dieser Dieselmotor ist für den Betrieb mit Schweröl ausgelegt, welches aus einem Kraftstofftank 1 im Niederdruckbereich über ein Kraftstoffniederdrucksystem 2 mittels mehrerer Hochdruckpumpen 3 über jeweils separate Pumpenleitungen 12 in einen Hochdruckbereich gefördert wird, der stromabwärts den Hochdruckpumpen 3 folgt. Bei der nicht dargestellten Brennkraftmaschine handelt es sich um einen Fünfzylindermotor, bei dem jedem Zylinder ein Injektor 9 zugeordnet ist.

Im Hochdruckbereich zwischen Hochdruckpumpen 3 und Injektoren 9 ist eine Druckspeicherleitung 16 vorgesehen, welche unter dem Begriff "Common Rail" bekannt ist, aus drei separaten, mittels Förderleitungen 6 miteinander verbundenen Speichereinheiten 5 aufgebaut ist und sich durch einen internen Hochdruckspeicher auszeichnet, der im Vergleich zum Volumen der übrigen, unter Hochdruck stehenden Leitungen 6, 12 ein deutlich grösseres Speichervolumen anbietet.

Die Speichereinheiten 5 sind aus rohrähnlichen Bauteilen 13 mit oder ohne Einbauten ausgestaltet, mittels Speicherdeckel 7 jeweils an den Stirnseiten abgedichtet und jeweils etwa auf Höhe der Zylinderköpfe entlang der nicht dargestellten Brennkraftmaschine angeordnet.

Jede Speichereinheit 5 ist mittels mindestens einer Hochdruckleitung 8 mit mindestens einem in der Regel elektronisch kontrollierten Injektor 9 verbunden.

Im vorliegenden Fall ist für zwei zu bedienende Zylinder je eine Speichereinheit 5 vorgesehen. Bei ungeraden Zylinderzahlen, wie im vorliegenden Fall, bedient die den Hochdruckpumpen 3 abgekehrte, d.h. in Strömungsrichtung letzte Speichereinheit 5 nur einen Zylinder. Je nach Motortyp und Anwendungsfall werden die einzelnen untereinander verbundenen Speichereinheiten 5 von zwei bis vier Hochdruckpumpen 3, im vorliegenden Fall von zwei Hochdruckpumpen 3, gefüllt, die alle mit ihrem Hochdruckanschluß in einem Pumpenspeicher 4 zusammengefaßt werden.

Der Pumpenspeicher 4 ist strömungstechnisch zwischen der Druckspeicherleitung 16 und den Hochdruckpumpen 3 in den Hochdruckbereich eingebracht, wobei jede Hochdruckpumpe 3 jeweils über eine separate Pumpenleitung 12 mit dem gemeinsamen Pumpenspeicher 4 verbunden ist.

Die Hochdruckpumpen 4 werden üblicherweise über bekannte mechanische Mittel wie Nocken 14 und Steuerwelle 15 von der Kurbelwelle des Dieselmotors im Takt angetrieben und daher oft in vorteilhafter Weise in der Nähe des Kurbelraums angeordnet. Die daraus resultierenden langen Pumpenleitungen 12 sind dann durch starke mechanische Belastungen wie Druckpulsationen gefährdet. Der Pumpenspeicher 4 hat den wesentlichen Vorteil, diese dynamischen Druckanteile zu eliminieren.

Der Pumpenspeicher 4 ist zwecks der Kraftstofförderung mit einem Speicherdeckel 7 einer Speichereinheit 5, im bevorzugten Ausführungsbeispiel mit dem in Längsrichtung der Druckspeicherleitung 16 ersten Speicherdeckel 7 der ersten Speichereinheit 5, hydraulisch verbunden.

In jedem Speicherdeckel 7 der Speichereinheiten sind hinsichtlich der Kraftstoffzuführung und -weiterleitung alle Funktionseinheiten integriert. In bevorzugter Weise beträgt das Speichervolumen jeder Speichereinheit 5 in etwa das 50 bis 500-fache der erforderlichen Einspritzmenge pro Zylinder und Arbeitsspiel.

Vor den Hochdruckpumpen 3 ist jeweils ein elektromagnetisch angesteuertes Drosselventil 31 angeordnet, über welches die Fördermenge jeder Hochdruckpumpe 3 geregelt werden kann. Vom Drosselventil 31 wird der Kraftstoff über ein Saugventil 32 in den Pumpenraum 33 geleitet. In der Förderphase der jeweiligen Hochdruckpumpe 3 schließt das Saugventil 32 und der Kraftstoff wird über ein Druckventil 34 in den Pumpenspeicher 4 gedrückt. Vom Pumpenspeicher 4, der wie bereits erwähnt die Hochdruck-Ausgänge aller Hochdruckpumpen 3 verbindet, wird der Kraftstoff weiter zu den einzelnen Speichereinheiten 5 geführt. Im gezeigten Fall liegt ohne Leitungsrohre 51 eine Serienschaltung der Speichereinheiten 5 vor. In die Speichereinheiten 5 können alternativ Leitungsrohre 51, versehen mit einer oder mehrerer Drosselbohrungen, eingesetzt werden, so daß sich eine Parallelschaltung der einzelnen Speichereinheiten 5 ergibt. Der Kraftstoff gelangt dann nicht mehr nacheinander von einer Speichereinheit 5 zur nächsten, sondern füllt die Speicher 5 gemeinsam von den über die Förderleitungen 6 gekoppelten Rohre 51 aus. In diesem Fall kann eine hydraulische Entkopplung der jeweiligen Speichereinheit 5 durch Drosseln mit einem Durchmesser von 2 bis 10 mm erfolgen.

Die die Speichereinheiten 5 miteinander verbindenden Förderleitungen 6 sind so dimensioniert, dass der mittlere Druck der in Durchströmungsrichtung der Förderleitungen 6 letzten Speichereinheit 5 bei Nennlast nicht mehr als 10% unter dem der in Durchströmungsrichtung ersten Speichereinheit fallen kann. Im bevorzugten Ausführungsbeispiel sind die Speichereinheiten 5 mit in axialer Länge ausgeführt, die bezogen auf die Achse der Brennkraftmaschine, dem Zylinderabstand mit einer Toleranz von +/- 20% entspricht.

Die Hochdruckpumpen 3 bauen also über den Pumpenspeicher 4 in der Druckspeicherleitung 16 einen vorgebbaren Hochdruck auf. Bei dem in der Fig. 1 dargestellten Ausführungsbeispiel zweigt, in Strömungsrichtung der Kraftstofförderung von Hochdruckpumpe 3 zur Druckspeicherleitung 16 betrachtet, hinter der letzten Speichereinheit 5 eine Entlastungseinrichtung 17 ab, um über eine Kraftstoffleitung Kraftstoff in den Kraftstofftank 1 zurückzuleiten. Die Entlastungseinrichtung 17 ist in Form eines Sicherheitsventils 11 und eines zusätzlichen Spülventils 10 ausgebildet. Sicherheitsventil 11 und Spülventil 10 können auch in Form eines einzigen Ventilelements realisiert sein. Das Spülventil 10 hat eine erste und zweite Schaltstellung. In der ersten kann Kraftstoff aus der Druckspeicherleitung 16 in den Kraftstofftank 1 strömen, in der zweiten muss der Kraftstoff über das Sicherheitsventil 11. Die Funktionsweise der Entlastungseinrichtung 17 wird weiter hinten noch näher beschrieben.

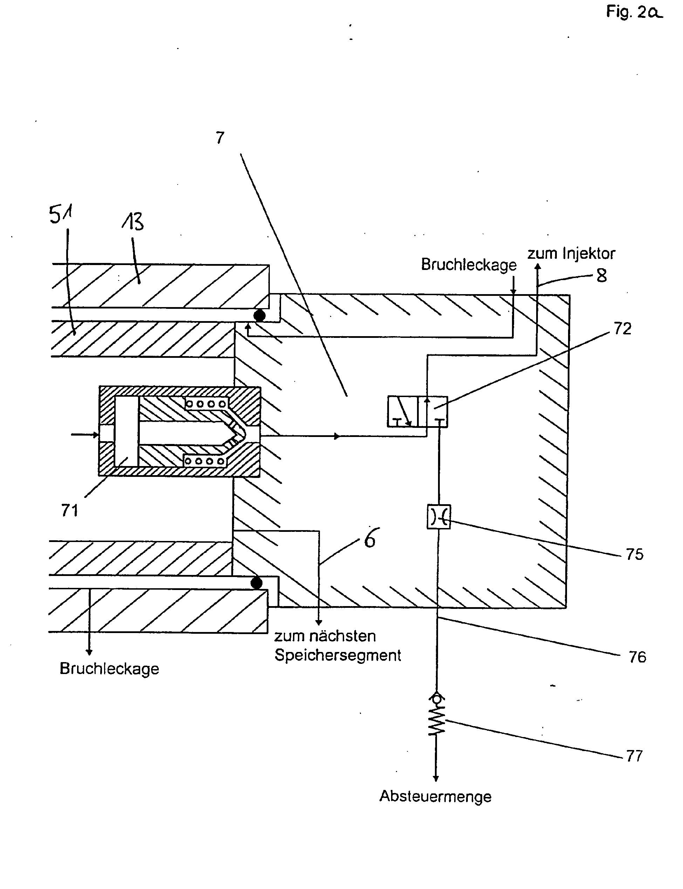

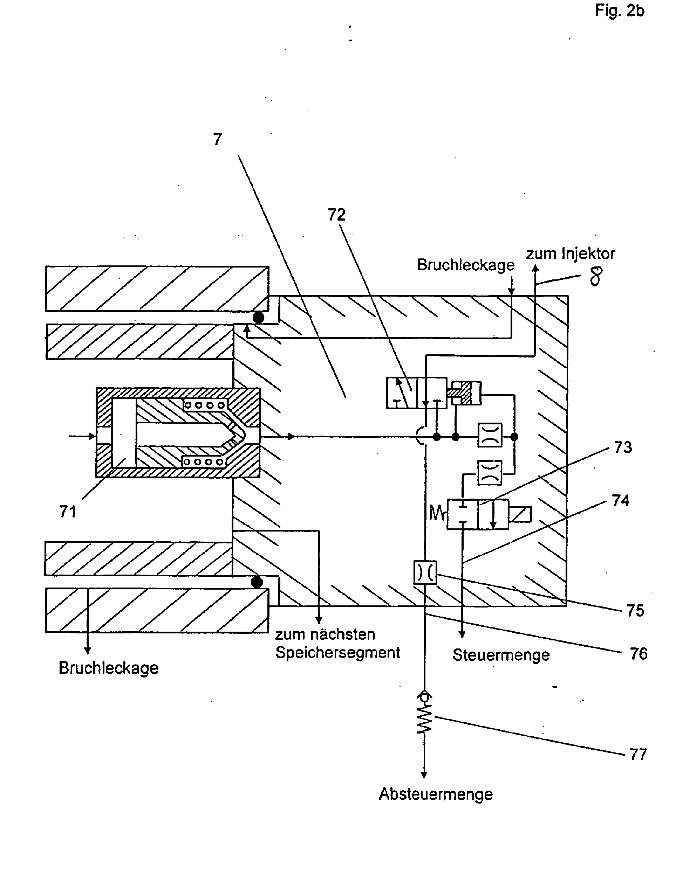

Von der jeweiligen Speichereinheit 5 aus gelangt der Kraftstoff über einen Durchflußbegrenzer 71 (Fig. 2) in die (bei zwei zugeordneten Injektoren 9) Speicherdeckel 7, wobei ein Speicherdeckel 7, wie aus Fig. 2 ersichtlich ist, mehrere Funktionseinheiten beinhaltet. So lässt sich über ein 3/2-Wege-Ventil 72, welches direkt geschaltet (Fig. 2a) oder indirekt (Fig. 2b) über ein elektromagnetisch angesteuertes 2/2-Wege-Ventil 73 betätigt wird, die Einspritzung steuern. Auf das Funktionsprinzip des 3/2-Wege-Ventils 72 wird nicht näher eingegangen.

Nach Fig. 2b fallen während der Steuerphase eine Steuer- und eine Absteuerleckage an. Die Steuerleckage wird über Leitung 74, die Absteuerleckage über eine Drossel 75, eine Leitung 76 und ein Druckhalteventil 77 abgeführt. Durch das Druckhalteventil 77 wird in der Absteuerleitung während der Absteuerphase ein dynamischer Gegendruck aufgebaut, der die Absteuerund damit die Verlustmenge verringert und Kavitation entgegenwirkt. Vom 3/2-Wege-Ventil gelangt der Kraftstoff dann zum Anschluß der Hochdruckleitung 8 und über diese zum jeweiligen Injektor 9, der aus einem konventionellen Nadelventil besteht.

Sollte sich aus welchen Gründen auch immer ein Überdruck in den Speichereinheiten 5 aufbauen, öffnet das auf einen bestimmten Druck eingestellte Sicherheitsventil 11 und schützt damit die Speichereinheiten 5 vor unzulässig hoher Druckbelastung (Fig. 1).

Wie eingangs erwähnt ist die Kraftstoffversorgungsanlage mit einer Heizung zur Vorwärmung des Schweröls versehen.

Um die "kalte" Brennkraftmaschine mit Schweröl starten zu können, muss die Kraftstoffversorgungsanlage also zunächst mit Hilfe von warmen zirkulierendem Schweröl erwärmt werden. Dazu wird das Spülventil 10 geöffnet und das Schweröl vom Niederdrucksystem 2 durch die Drosselventile 31 der Hochdruckpumpen 3, in die Pumpenräume 33 und von dort aus über den Pumpenspeicher 4 und die Speichereinheiten 5 über das Spülventil 10 zurück zum Kraftstofftank 1 gepumpt. Die Spülung der Kraftstoffversorgungsanlage in der voran beschriebenen Reihenfolge kann alternativ in Gegenrichtung mittels eines zusätzlichen Spülventils an den Hochdruckpumpen 3 durch Anlegen eines Spüldrucks bzw. durch getaktete Ansteuerung des 3/2-Wege-Ventils der Speicherdeckel. Eine optimale Spülung ist bei Reihenschaltung der Speichereinheiten 5 zu erzielen.

Das Spülventil 10 kann in bekannter Weise hydraulisch mittels eines Steuerfluids pneumatisch oder mittels elektromagnetischer Betätigung gesteuert werden.

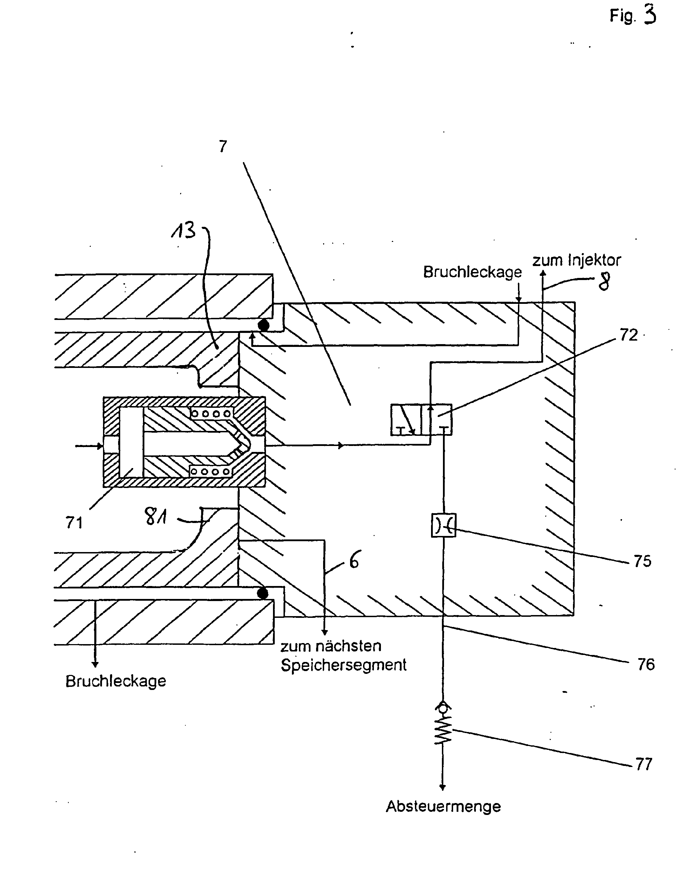

Gemäss der Fig. 3 sind die Speichereinheiten 5 mit einem rohrförmigen Bauteil 13, d.h. Speicherkörper ausgeführt, der alternativ an beiden Stirnseiten mit einer Verjüngung, d.h. einer Querschnittsverengung 81 seines Speichervolumens versehen werden kann, so dass die Speicherdeckel 7 einen kleineren, verengten Öffnungsquerschnitt bezüglich des mittleren Querschnitts durch den Speicherkörper 13 abdichten müssen. Durch die Querschnittsverengungen 81 der beiden Enden des Speicherkörpers 13 wird die Speicherdeckelverschlußkraft deutlich verringert, die Anzahl der für die Verspannung der Dichtflächen nötigen Schrauben deutlich verringert, was deutlich mehr Platz für Schaltventile im Speicherdeckel 7 ermöglicht.

Wie bereits erwähnt enthält ein Speicherdeckel 7 mindestens ein 3/2-Wege-Ventil (incl. Eventuell eines 2/2-Wege-Ventils zur Steuerung des 3/2-Wege-Ventils), ein Mengenbegrenzungsventil, sämtliche Hydraulikanschlüsse, die Halterung für das gesamte Speicherelement 7 an der Brennkraftmaschine und die Fixierung und Abdichtung des rohrförmigen Speicherkörpers 13. Vorzugsweise sind alle hydraulischen, bzw. steuerbedingten Anschlüsse im Speicherdeckel 7 radial (platzsparend) angeordnet, das eben eine günstige Ausführung der Verbindungsleitungen, bzw. Förderleitungen 6 ermöglicht.

Für die Abdichtung eines rohrförmigen Bauteils 13 mittels eines Speicherdeckels 7 sind verschiedene vorteilhafte Dichtgeometrien realisierbar.

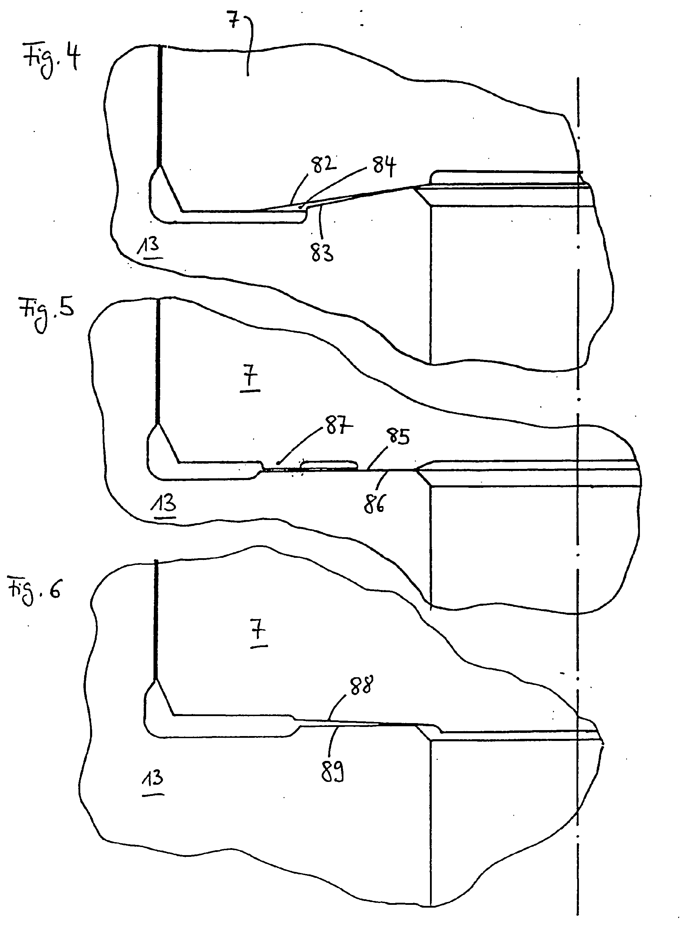

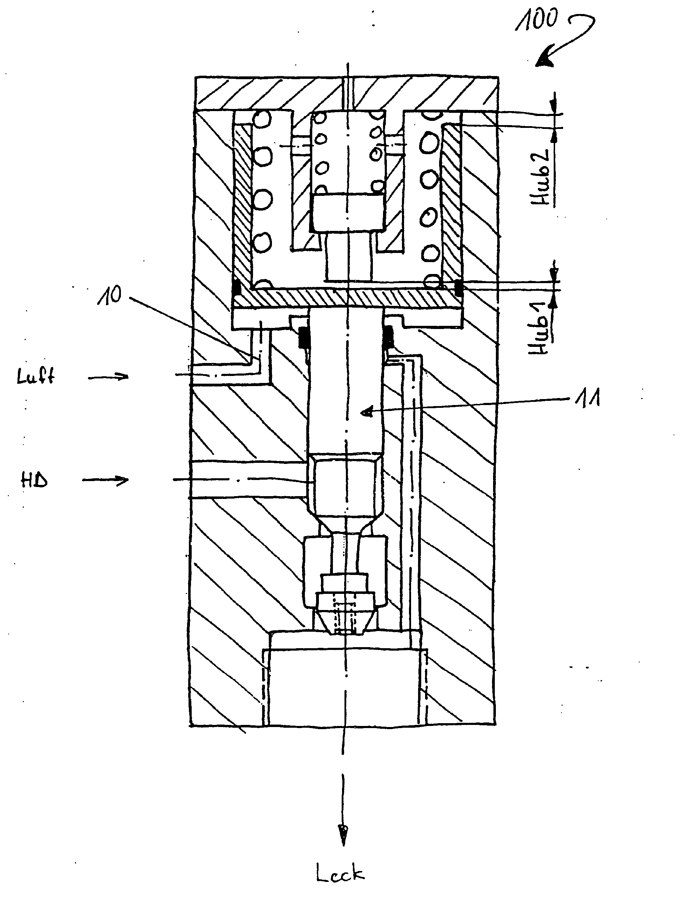

Fig. 4 zeigt, dass der Speicherdeckel 7 mit einer innenliegenden Kegelfläche 82 zur Abdichtung des stirnseitigen Öffnungsquerschnitts des rohrförmigen Speicherkörpers 13 ausgestaltet sind, wobei der Speicherkörper 13 an seinen Stirnseiten mit entsprechend gerichteten Kegelflächen 83 ausgebildet ist und die Abdichtung des Speicherkörpers 13 durch Verspannen der jeweiligen Kegelfläche 82, 83 unter Ausbildung eines Differenzwinkels 84 hergestellt ist. Damit wird radial innenliegend eine maximale Dichtwirkung erzielt, der Innendruck unterstützt sogar die Dichtwirkung.

Alternativ zeigt Fig. 5, dass die Speicherdeckel 7 mit jeweils einer innenliegenden ebenen Dichtfläche 85 ausführbar sind, die mit einer entsprechenden eben ausgeführten Stirnfläche 86 des Speicherkörpers 13 verspannt werden kann, wobei zwischen Speicherdeckel 7 und Stirnfläche des Speicherkörpers 13 koaxial um die ebenen Dichtflächen 85,86 ein Stützring 87 einbringbar ist.

Als weitere Alternative zeigt Fig. 6, dass die Abdichtung des Speicherkörpers 13 durch die Speicherdeckel 7 jeweils mittels Verspannung einer flachen Kegelfläche 88 mit einer ebenen Dichtfläche 89 erfolgen kann. Beide Alternativen ermöglichen die Optimierung der Dichtpressung auf der inneren Dichtfläche.

Letztendlich zeigt Fig. 7 eine besonders vorteilhafte Ausgestaltung der Entlastungseinrichtung 17 (Fig. 1), die das Spülventil 10, bzw. das Sicherheitsventil 11 in einer Ventileinrichtung vereinigt. Verwendet werden WegeVentile, die durch Stellbewegungen zwischen den Anschlüssen Verbindungen herstellen und dadurch Lauf und Fliessrichtung des Kraftstöffstroms bestimmen. Die Bezeichnung der Ventile richtet sich nach Anzahl der geschalteten Anschlüsse und Anzahl der Schaltstellungen (3 Anschlüsse, 2 Schaltstellungen = 3/2-Wege-Ventil).

Die kombinierte Ventileinrichtung 100 soll folgende Funktionen darstellen:
Ein Sicherheitsventil 11 ist federbelastet mit einem Öffnungsdruck p_{ö} = 1800 bar.
Ein Spülventil öffnet mit Druckluft p_{ö} = 20 bar während der Spüldauer.
Ein Druckablassventil öffnet durch Beaufschlagung des Pneumatikkolbens mit Druckluft pₘᵢₙ = 6 bar.

Der Speicherdeckel 7 umfasst wie gesagt eine Ventileinrichtung in Form eines 3/2-Wege-Schaltventils 91 (Fig. 1). Die Absteuermenge des 3/2-Wege-Ventils 91 reduziert sich durch Aufbringen eines entsprechenden Gegendrucks. Absteuermengen des 3/2-Wege-Ventils (und des 2/2-Wege-Ventils) werden über eine gemeinsame Leitungsführung 92 (Fig. 1), aber hydraulisch getrennt, abgeführt. Um ein Schliessverhalten der Einspritzdüse, d.h. eines Injektors 9 für optimale Betriebswerte des Motors zu erreichen, ist ein Gegendruck für den abgesteuerten Kraftstoff des 3/2-Wege-Ventils von 5 bis 100 bar optimal.

Zusammenfassend hat das modulare Konzept der erfindungsgemässen Kraftstoffversorgungsanlage unter anderem folgende besondere Vorteile: Durch die vorteilhafte Kombination von federbelasteten Einspritzventil (Injektor 9) und im Speicherdeckel 7 angeordneten 3/2-Wege-Ventil ist die Ausrüstung bestehender Motortypen mit Common-Rail-Einspritzsystemen deutlich vereinfacht. Optional kann das 3/2-Wege-Ventil auch zwischen Speichereinheit 5 und Injektor 9 angeordnet werden.

Durch den direkten Anbau des 3/2-Wege-Ventils am Speicherdeckel 7 werden die Druckschwingungen, die bei anderen Common-Rail- Einspritzsystemen besonders bei Einspritzende auftreten, vermieden. Das bedeutet eine deutliche Reduzierung der Belastung.
Mittels mehrfacher Betätigung des 3/2-Wege-Ventils (sehr schnell schaltendes Ventil) an der Speichereinheit 5 kann auch eine Formung des Einspritzverlaufs bzw. Vor- und Nacheinspritzung erreicht werden, und zwar im Bereich zwischen 1 und 50 °KW vor Beginn bzw. nach Beendigung der Haupteinspritzung mit 0.5 bis 50% der Haupteinspritzmenge.

### Bezugszeichenliste:

- 1: Kraftstofftank
- 2: Kraftstoffniederdrucksystem
- 3: Hochdruckpumpe
- 4: Pumpenspeicher
- 5: Speichereinheit
- 6: Förderleitung von Speichereinheit zu Speichereinheit
- 7: Speicherdeckel
- 8: Hochdruckleitung vor Injektor
- 9: Injektor
- 10: Spülventil
- 11: Sicherheitsventil
- 12: Pumpenleitung
- 13: Rohrähnliches Bauteil einer Speichereinheit
- 14: Nocken
- 15: Steuerwelle
- 16: Druckspeicherleitung
- 17: Entlastungseinrichtung

- 31: Drosselventil
- 32: Saugventil
- 33: Pumpenraum
- 34: Druckventil

- 51: Speicherrohr

- 71: Durchflussbegrenzer
- 72: 3/2-Wege-Ventil
- 73: 2/2-Wege-Ventil
- 74: Steuerleckage
- 75: Drossel für Absteuerleckage
- 76: Leitung
- 77: Druckhalteventil

- 81: Querschnittsverengung
- 82: Innenliegende Kegelfläche
- 83: Kegelfläche
- 84: Differenzwinkel
- 85: Ebene Dichtfläche
- 86: Ebene Stirnfläche
- 87: Stützring
- 88: Fläche Kegelfläche
- 89: Ebene Dichtfläche

- 91: 3/2-Wege-Ventil
- 92: Leitungsführung

- 100: Ventileinrichtung

## Patentansprüche

1. Kraftstoffversorgungsanlage in Form eines Common-Rail-Systems einer Brennkraftmaschine mit mehreren Zylindern, wobei Kraftstoff von einer Pumpvorrichtung (2, 3) von einem Niederdruckbereicht in einen Hochdruckbereich befördert wird, die Pumpvorrichtung (2, 3) entweder mindestens zwei Hockdruckpumpen (3) oder eine Hochdruckpumpe mit mindestens zwei Pumpenelementen umfasst und der Hochdruckbereich eine Druckspeicherleitung (16) aus mindestens zwei separaten, mittels Förderleitungen (6) miteinander verbundenen Speichereinheiten (5) umfasst, und an die Speichereinheiten (5) jeweils Brennstoffinjektoren (9) für die Zylinder anschließbar sind, und die Speichereinheiten (5) der Druckspeicherleitung (16) so ausgelegt sind, dass sie jeweils ein Speichervolumen zur Bedienung für höchstens zwei Zylinder aufweisen, und dass hydraulische Mittel (10, 11) zur Spülung der Kraftstoffversorgungsanlage vorgesehen sind, **dadurch gekennzeichnet, dass** jeweils an beiden Stirnseiten der Speichereinheiten (5) Speicherdeckel (7) vorgesehen sind, in diese Steuermittel zur Drosselung, Durchfluss- und Mengenbegrenzung (71, 72, 75) integriert sind, die zur Versorgung der Einspritzung jeweils eines Zylinders benötigt werden, und dass im Hochdruckbereich strömungstechnisch zwischen der Pumpvorrichtung (2, 3) und zusammengesetzter Druckspeicherleitung (16) mindestens ein separater Pumpenspeicher (4) angeordnet ist, der zur Kraftstoffförderung mit wenigstens einem Speicherdeckel (7) einer Speichereinheit (5) der Druckspeicherleitung (16) verbunden ist.

2. Kraftstoffversorgungsanlage nach Anspruch 1, **dadurch gekennzeichnet, dass** das Speichervolumen jeder Speichereinheit (5) in etwa das 50 bis 500-fache der erforderlichen Einspritzmenge pro Zylinder und Arbeitsspiel beträgt.

3. Kraftstoffversorgungsanlage nach einem der vorangehenden Ansprüche, **dadurch gekennzeichnet, dass** die Speichereinheiten (5) der Druckspeicherleitung (16) über die Förderleitungen (6) in Serie mit Kraftstoff beaufschlagbar sind.

4. Kraftstoffversorgungsanlage nach einem der vorhergehenden Ansprüchen 1 bis 3, **dadurch gekennzeichnet, dass** die Speichereinheit (5) der Druckspeicherleitung (16) in axialer Richtung verlegte Leitungsrohre (51), die Drosselbohrung aufweisen, umfassen, so dass alle Speichereinheiten (5) parallel mit Kraftstoff beaufschlagbar sind.

5. Kraftstoffversorgungsanlage nach einem der vorangehenden Ansprüche, **dadurch gekennzeichnet, dass** die Speichereinheiten (5) mit einer axialen Länge ausgeführt sind, die, bezogen auf die Achse der Brennkraftmaschine, dem Zylinderabstand mit einer Toleranz von +/- 20% entspricht.

6. Kraftstoffversorgungsanlage nach Anspruch 1, **dadurch gekennzeichnet, dass** zur Ausbildung einer Speichereinheit (5) ein rohrförmiger Speicherkörper (13) an beiden Stirnseiten jeweils mittels eines Speicherdeckels (7) geschlossen ist.

7. Kraftstoffversorgungsanlage nach Anspruch 6, **dadurch gekennzeichnet, dass** der rohrförmige Speicherkörper (13) an beiden Stirnseiten mit einer Verjüngung, d.h. einer Querschnittsverengung (81) versehen ist, so dass die Speicherdeckel (7) einen kleineren Öffnungsquerschnitt verglichen mit dem Querschnitt durch den Speicherkörper (13) abdichten müssen.

8. Kraftstoffversorgungsanlage nach Anspruch 6 oder 7, **dadurch gekennzeichnet, dass** die Speicherdeckel (7) mit einer innen liegenden Kegelfläche (82) zur Abdichtung des Öffnungsquerschnittes des Speicherkörpers (13) ausgestaltet sind, der Speicherkörper an seinen Stirnseiten mit entsprechend gerichteten Kegelflächen (83) ausgebildet ist und die Abdichtung des Speicherkörpers (13) durch Verspannen der jeweiligen Kegelflächen (82, 83) unter Ausbildung eines Differenzwinkels (84) hergestellt ist.

9. Kraftstoffversorgungsanlage nach Anspruch 6 oder 7, **dadurch gekennzeichnet, dass** die Speicherdeckel (7) mit jeweils einer innen liegenden ebenen Dichtfläche (85) ausgeführt sind, die mit der entsprechend eben ausgeführten Stirnfläche (86) des Speicherkörpers (13) verspannt werden kann, wobei zwischen Speicherdeckel (7) und Stirnfläche (86) koaxial um die ebenen Dichtflächen (85, 86) ein Stützring (87) einbringbar ist.

10. Kraftstoffversorgungsanlage nach Anspruch 6 oder 7, **dadurch gekennzeichnet, dass** die Abdichtung des Speicherkörpers (13) durch die Speicherdeckel (7) jeweils mittels Verspannung einer flachen Kegelfläche (88) mit einer ebenen Dichtfläche (89) erfolgt.

11. Kraftstoffversorgungsanlage nach Anspruch 6, **dadurch gekennzeichnet, dass** die Speicherdeckel (7) eine Ventileinrichtung in Form eines 3/2-Wege-Schaltventils (72) umfassen.

12. Kraftstoffversorgungsanlage nach Anspruch 6, **dadurch gekennzeichnet, dass** die Ventileinrichtung (72) mittels eines weiteren 2/2-Wegeventils (73) schaltbar ist.

13. Kraftstoffversorgungsanlage nach Anspruch 1, **dadurch gekennzeichnet, dass** im Spülkreislauf der den Niederdruckbereich, eine Hochdruckpumpe (3), einen Pumpenspeicher (4), sowie die Druckspeicherleitung (16) umfasst, eine Entlastungseinrichtung (100) vorgesehen ist, die die Funktionen eines Sicherheitsventils (11) für die Druckspeicherleitung (16) sowie eines durch Druckluft steuerbares Spülventils (10) in sich vereinigt, wobei die Entlastungseinrichtung (100) der in Förderrichtung letzten Speichereinheit (5) zugeordnet ist.

14. Kraftstoffversorgungsanlage nach einem der Ansprüche 1 bis 13, **gekennzeichnet durch** die Verwendung bei einem Großdieselmotor.

## Claims

1. A fuel supply system in the form of a common-rail system of an internal combustion engine having a plurality of cylinders, wherein fuel is conveyed by a pump arrangement (2, 3) from a low-pressure area into a high-pressure area, the pump arrangement (2, 3) comprises either at least two high-pressure pumps (3) or one high-pressure pump with at least two pump elements, and the high-pressure area comprises a pressure-reservoir line (16) consisting of at least two separate reservoir units (5) which are connected together by means of conveyor lines (6), and respective fuel injectors (9) for the cylinders can be connected to the reservoir units (5), and the reservoir units (5) of the pressure-reservoir line (16) are designed in such a way that they each have a reservoir volume for operation for at most two cylinders and that hydraulic means (10, 11) are provided to flush the fuel supply system, **characterised in that** provided at both ends of the reservoir units (5) there are respective reservoir covers (7), integrated into these there are control means for choking, through-flow- and quantity-limitation (71, 72, 75) that are required for the supply for the injection of in each case one cylinder, and **in that** arranged in the high-pressure area in terms of fluid mechanics between the pump arrangement (2, 3) and the assembled pressure-reservoir line (16) there is at least one separate pump reservoir (4) which in order to convey fuel is connected to at least one reservoir cover (7) of one reservoir unit (5) of the pressure-reservoir line (16).

2. A fuel supply system according to claim 1, **characterised in that** the reservoir volume of each reservoir unit (5) amounts to approximately 50 to 500 times the required injection quantity per cylinder and working cycle.

3. A fuel supply system according to one of the preceding claims, **characterised in that** fuel can be applied to the reservoir units (5) of the pressure-reservoir line (16) by way of the conveyor lines (6) in series.

4. A fuel supply system according to one of the preceding claims 1 to 3, **characterised in that** the reservoir units (5) of the pressure-reservoir line (16) comprise line pipes (51), which are laid in the axial direction and have choke bores, so that fuel can be applied to all the reservoir units (5) in parallel.

5. A fuel supply system according to one of the preceding claims, **characterised in that** the reservoir units (5) are constructed with an axial length which, relative to the axis of the internal combustion engine, corresponds to the cylinder spacing with a tolerance of ± 20%.

6. A fuel supply system according to claim 1, **characterised in that** in order to form a reservoir unit (5) a tubular reservoir body (13) is closed at both ends by means of a respective reservoir cover (7).

7. A fuel supply system according to claim 6, **characterised in that** the tubular reservoir body (13) is provided, at both ends, with a tapered portion, that is, a cross-sectional constriction (81) so that the reservoir covers (7) have to seal a smaller opening cross-section in comparison with the cross-section through the reservoir body (13).

8. A fuel supply system according to claim 6 or 7, **characterised in that** the reservoir covers (7) are configured with an inner conical face (82) to seal the opening cross section of the reservoir body (13), the reservoir body at its ends is formed with correspondingly directed conical faces (83), and the seal of the reservoir body (13) is produced by bracing the respective conical faces (82, 83) with the formation of a differential angle (84).

9. A fuel supply system according to claim 6 or 7, **characterised in that** the reservoir covers (7) are constructed with in each case an inner planar sealing face (85) that can be braced with the end face (86) of the reservoir body (13) that is constructed in a correspondingly planar manner, in which case a supporting ring (87) can be introduced between the reservoir cover (7) and the end face (86) coaxially about the planar sealing faces (85, 86).

10. A fuel supply system according to claim 6 or 7, **characterised in that** the reservoir body (13) is sealed by the reservoir covers (7) in each case by bracing a shallow conical face (88) with a planar sealing face (89).

11. A fuel supply system according to claim 6, **characterised in that** the reservoir covers (7) comprise a valve device in the form of a 3/2-way switching valve (72).

12. A fuel supply system according to claim 6, **characterised in that** the valve device (72) can be switched by means of a further 2/2-way valve (73).

13. A fuel supply system according to claim 1, **characterised in that** provided in the flushing circuit that includes the low-pressure area, a high-pressure pump (3), a pump reservoir (4) and also the pressure-reservoir line (16) there is a relief device (100) which combines within itself the functions of a safety valve (11) for the pressure-reservoir line (16) and also a flushing valve (10) which can be controlled by compressed air, with the relieving device (100) being associated with the last reservoir unit (5) in the conveying direction.

14. A fuel supply system according to one of claims 1 to 13, **characterised by** use in a large diesel engine.

## Revendications

1. Installation d'alimentation en carburant sous la forme d'un système à rampe commune d'un moteur à combustion interne à plusieurs cylindres, dans laquelle
le carburant est transféré par un dispositif de pompes (2, 3) d'une zone basse pression à une zone haute pression, le dispositif de pompes (2, 3) se composant d'au moins deux pompes haute pression (3) ou d'une pompe haute pression et d'au moins deux éléments de pompe et la zone haute pression comprend une conduite d'accumulation de pression (16) formée d'au moins deux unités d'accumulation (5) distinctes, reliées par des conduites de transfert (6) et des injecteurs de carburant (9) pour les cylindres étant branchés sur les unités d'accumulation (5),
les unités d'accumulation (5) de la conduite d'accumulation de pression (16) sont conçues pour avoir chacune une capacité permettant d'alimenter au moins deux cylindres, et
des moyens hydrauliques (10, 11) sont prévus pour rincer l'installation d'alimentation en carburant,
**caractérisée en ce que**
les deux faces frontales des unités d'accumulation (5) sont munies de couvercles (7) intégrant des moyens de commande d'étranglement, de limitation de débit et de quantité (71, 72, 75), nécessaires pour alimenter l'injection de chaque cylindre, et
dans la zone haute pression entre le dispositif de pompe (2, 3) et la conduite d'accumulation de pression (16) composée, comporte au moins un accumulateur de pression (4), séparé hydrauliquement, cet accumulateur étant relié à au moins un couvercle (7) d'une unité d'accumulation (5) de la conduite d'accumulation de pression (16) pour le transfert du carburant.

2. Installation d'alimentation en carburant selon la revendication 1,
**caractérisée en ce que**
la capacité de chaque unité d'accumulation (5) correspond environ de 50 à 500 fois la dose d'injection nécessaire par cylindre et par cycle de fonctionnement.

3. Installation d'alimentation en carburant selon l'une des revendications précédentes,
**caractérisée en ce que**
les unités d'accumulation (5) de la conduite d'accumulation de pression (16) sont sollicitées par le carburant, en série, par l'intermédiaire des conduites de transfert (6).

4. Installation d'alimentation en carburant selon l'une des revendications précédentes 1 à 3,
**caractérisée en ce que**
l'unité d'accumulation (5) de la conduite d'accumulation de pression (16) comprend des conduites (51) disposées dans la direction axiale et ayant des perçages d'étranglement pour que toutes les unités d'accumulation (5) reçoivent le carburant en parallèle.

5. Installation d'alimentation en carburant selon l'une des revendications précédentes,
**caractérisée en ce que**
les unités d'accumulation (5) ont une longueur axiale qui correspond à l'écartement des cylindres selon l'axe du moteur à combustion interne avec une tolérance de +/- 20 %.

6. Installation d'alimentation en carburant selon la revendication 1,
**caractérisée en ce que**
pour réaliser une unité d'accumulation (5) on ferme un organe d'accumulation (13) de forme tubulaire, au niveau de ses deux faces frontales, chacune à l'aide d'un couvercle (7).

7. Installation d'alimentation en carburant selon la revendication 6,
**caractérisée en ce que**
le corps (13) de l'unité au niveau de ses deux faces frontales d'accumulation de forme tubulaire est muni d'un rétrécissement, c'est-à-dire d'une diminution de section (81) pour que le couvercle (7) de l'unité d'accumulation assure l'étanchéité d'une section d'ouverture plus petite comparée à la section du corps (13) de l'unité d'accumulation.

8. Installation d'alimentation en carburant selon la revendication 6 ou 7,
**caractérisée en ce que**
le couvercle (7) de l'unité d'accumulation est muni d'une surface conique (82) située à l'intérieur pour réaliser l'étanchéité de la section d'ouverture du corps (13) de l'unité d'accumulation, le corps de l'unité d'accumulation ayant des faces frontales avec des surfaces coniques (83) dirigées de façon correspondante et l'étanchéité du corps (13) de l'unité d'accumulation se fait par serrage des surfaces coniques respectives (82, 83) en formant une différence angulaire (84).

9. Installation d'alimentation en carburant selon la revendication 6 ou 7,
**caractérisée en ce que**
les couvercles (7) de l'unité d'accumulation sont munis respectivement d'une surface d'étanchéité (85) plane du côté intérieur et qui peut être serrée sur une surface frontale (86) également plane du corps (13) de l'unité d'accumulation, et entre le couvercle (7) et la surface frontale (86) on insère coaxialement une bague d'appui (87) autour des surfaces d'étanchéité planes (85, 86).

10. Installation d'alimentation en carburant selon la revendication 6 ou 7,
**caractérisée en ce que**
l'étanchéité du corps (13) de l'unité d'accumulation se fait par le couvercle d'accumulateur (7), chaque fois par serrage d'une surface conique plate (88) et d'une surface d'étanchéité plane (89).

11. Installation d'alimentation en carburant selon la revendication 6,
**caractérisée en ce que**
les couvercles (7) des unités d'accumulation comportent une installation de vanne sous la forme d'une vanne de commutation à 3/2 voies (72).

12. Installation d'alimentation en carburant selon la revendication 6,
**caractérisée en ce que**
l'installation de vanne (72) est commutée à l'aide d'une vanne à 2/2 voies (73).

13. Installation d'alimentation en carburant selon la revendication 1,
**caractérisée en ce que**
le circuit de rinçage comprenant la zone basse pression, une pompe haute pression (3), un accumulateur de pompe (4) et une conduite d'accumulation de pression (16), comporte une installation de décharge (100) assurant les fonctions d'une soupape de sécurité (11) pour la conduite d'accumulation de pression (16) ainsi que celle d'une vanne de rinçage (10) commandée par de l'air comprimé, et l'installation de décharge (100) est associée au sens de transfert de la dernière unité d'accumulation (5).

14. Installation d'alimentation en carburant selon l'une des revendications 1 à 13,
**caractérisée par**
son application à un moteur Diesel de grande dimension.
